(19) Europäisches Patentamt
European Patent Office
Office européen des brevets

(11) Veröffentlichungsnummer: **0 107 811**
**B1**

(12) # EUROPÄISCHE PATENTSCHRIFT

(45) Veröffentlichungstag der Patentschrift: **10.12.86**

(51) Int. Cl.⁴: **C 08 G 18/54**, B 22 C 1/22, C 08 G 8/38, C 08 G 8/28

(21) Anmeldenummer: **83109881.9**

(22) Anmeldetag: **04.10.83**

(54) **Unter Polyurethanbildung kalthärtendes Formstoff-Bindemittel, dessen Herstellung und dessen Verwendung.**

(30) Priorität: **06.10.82 DE 3237000**

(43) Veröffentlichungstag der Anmeldung: **09.05.84 Patentblatt 84/19**

(45) Bekanntmachung des Hinweises auf die Patenterteilung: **10.12.86 Patentblatt 86/50**

(84) Benannte Vertragsstaaten: **AT BE CH DE FR GB IT LI NL SE**

(56) Entgegenhaltungen:
**EP - A - 0 013 402**
**FR - A - 2 123 445**

(73) Patentinhaber: **Hüttenes-Albertus Chemische-Werke GmbH, Wiesenstrasse 23-64, D-4000 Düsseldorf-Heerdt 11 (DE)**

(72) Erfinder: **Torbus, Marek, Dr. Dipl.-Chem., Merowinger Strasse 131, D-4000 Düsseldorf (DE)**
Erfinder: **Vujevic, Aleksandar, Dipl.-Chem., Rosendalstrasse 25, D-4030 Ratingen 8 (DE)**

(74) Vertreter: **Eikenberg & Brümmerstedt Patentanwälte, Schackstrasse 1, D-3000 Hannover 1 (DE)**

**EP 0 107 811 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der Giessereitechnik hat die Verwendung von Wasserschlichten aus wirtschftlichen und ökologischen Gründen stark zugenommen. Bei kunstharzgebundenen Formteilen können solche Schlichten jedoch zu Schwierigkeiten führen, weil viele Bindemittel auf einen Feuchtigkeitseinfluss mit einer Abnahme der Festigkeit reagieren.

Diese Festigkeitsabnahme lässt sich bei heiss gehärteten Formteilen weitgehend vermeiden, wenn die Wasserschlichte auf die noch heisse Oberfläche der Formteile aufgetragen wird. Dann verdampft das Wasser sehr schnell und dringt auch nicht tief in das Formteil ein, so dass die Belastung des Bindemittels durch Wasser bzw. Wasserdampf gering bleibt. Bei erkalteten oder von vornherein kalt gehärteten Formteilen ist die Situation jedoch ganz anders, denn dann kann das Wasser aus der Schlichte, insbesondere auch der sich beim Trocknen der Schlichte bildende Wasserdampf, tief in das Formteil eindringen, und auch die anschliessende Trocknung dauert sehr lange. Die Folge ist eine so erhebliche Belastung des Bindemittels durch Wasser bzw. Wasserdampf, dass insbesondere Kerne und entsprechende kleine Formteile, die ganz oder weitgehend von dem Wasser durchdrungen werden, völlig unbrauchbar werden.

Hinzu kommt, dass eine bedeutende Gruppe von kalthärtenden Bindemitteln, nämlich die Gruppe der Bindemittel auf Polyurethanbasis, ganz besonders feuchtigkeitsempfindlich ist. Diese Bindemittel entstehen in der Formstoffmischung durch Umsetzung eines Polyols mit einem Polyisocyanat in Gegenwart eines Katalysators (tertiäre Amine oder metallorganische Verbindungen). Das Polyol ist dabei normalerweise eine Lösung eines Kondensationsproduktes aus Phenolen und Aldehyden mit geringem bis mittlerem Kondensationsgrad, das nachfolgend auch kurz und allgemein als «Phenolharz» bezeichnet wird.

Zwar ist schon versucht worden (DE-A-2 165 519), die Bindemittel auf Polyurethan-Basis durch einen Ölzusatz (Silikonöl, Mineralöl oder Rizinusöl) feuchtigkeitsstabiler zu machen, aber nur mit dem Ziel, den Einfluss der Luftfeuchtigkeit auf die fertigen Formteile zu vermindern und damit ihre Lagerfähigkeit zu verbessern. Gegen den – im Vergleich zur Luftfeuchtigkeit um ein Vielfaches stärkeren – Einfluss des Wassers aus Wasserschlichten sind solche Ölzusätze wirkungslos. Auch der Weg, den Festigkeitsabfall durch Erhöhung der Bindemittelmenge wenigstens teilweise abzufangen, verbietet sich, weil dann andere Probleme (Gasentwicklung, Gussfehler, Umweltbelastung, Unwirtschaftlichkeit) auftreten. Somit sind derzeit Wasserschlichten bei polyurethan-gebundenen Formteilen kaum einsetzbar.

Mit der Erfindung soll nunmehr ein kalthärtendes Bindemittel auf Polyurethanbasis zur Verfügung gestellt werden, das weitgehend unempfindlich gegen Feuchtigkeit ist und insbesondere der hohen Feuchtigkeitsbelastung durch Wasserschlichten standhält.

Ausgehend von einem Bindemittel, dessen Grundbestandteile ein Phenol in Form einer Lösung eines OH-gruppenhaltigen Phenol-Aldehyd-Kondensats (also eines Phenolharzes gemäss vorstehender Definition) und ein Polyisocyanat sind, wird dieses Ziel erfindungsgemäss dadurch erreicht, dass das Phenol-Aldehyd-Kondensat ersetzt ist durch ein Co-Kondensat aus Phenolen, Aldehyden und einem hydroxyfunktionellen Alkylphenylsiloxan, welches einen Gehalt von mindestens 3 Gew.-% an freien OH-Gruppen aufweist und in dem Co-Kondensat in einer Menge von 0,1 bis 5 Gew.-%, bezogen auf das Endprodukt, enthalten ist.

Die Erfindung beruht auf der unerwarteten Erkenntnis, dass Polyurethan-Bindemittel, bei denen das Phenolharz noch zusätzlich ein OHgruppenhaltiges Alkylphenylsiloxan einkondensiert enthält, unter Beibehaltung ihrer sonstigen guten Eigenschaften eine wesentlich erhöhte Wasserresistenz aufweisen. Damit können erstmals polyurethan-gebundene kalt gehärtete Formteile hergestellt werden, die sich ohne schädlichen Festigkeitsabfall mit Wasserschlichten behandeln lassen. Dieser Erfolg der Erfindung, der auch weitgehend erhalten bleibt, wenn das erfindungsgemässe Bindemittel mit einer gewissen Menge an herkömmlichem Phenolharz verschnitten wird, ist umso überraschender, als weder die blosse Zugabe eines OH-gruppenhaltigen Alkylphenylsiloxans zu einem fertigen Phenol-Aldehyd-Kondensat noch der Einsatz von Alkylphenylsiloxanen ohne freie OH-Gruppen eine Wirkung bringt. Auf welchem Wirkungsmechanismus die Erfindung beruht, ist noch nicht bekannt.

Die für die Zwecke der Erfindung geeigneten hydroxyfunktionellen Alkylphenylsiloxane besitzen die Grundbausteine

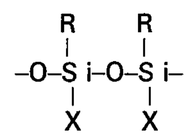

(I),

d.h. die Si-Atome sind jeweils über ein Sauerstoffatom gebunden und tragen mindestens einen organischen Rest. Einige der Si-Atome weisen ausserdem freie OH-Gruppen auf, so dass sich die allgemeine Formel

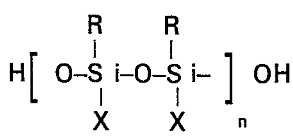

(II),

ergibt, in der

n eine ganze Zahl von 1 an aufwärts,

R zum Teil ein Alkylrest mit bis zu 4 C-Atomen und zum restlichen Teil ein Phenylrest, und

X weitere R-Reste und/oder weitere Grundbausteine (I) und/oder OH-Gruppen

bedeuten. Diese Verbindungen können lineare, verzweigte und, wenn an den Kettenenden ein Ringschluss eintritt, auch ringförmige Struktur haben. Ein Beispiel für eine einfache ringförmige Struktur ist die Verbindung

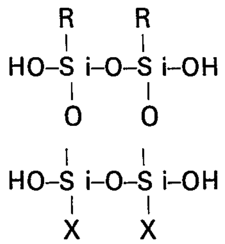

(III)

Die Alkylphenylsiloxane gemäss der allgemeinen Formel (II) sind feste schmelzbare Substanzen mit einem Molekulargewicht von etwa 300 an aufwärts, die in den für Phenolharze üblichen Lösungsmitteln löslich sind. Wichtig ist es, dass ihr Gehalt an freien OH-Gruppen mindestens 3 Gew.-% beträgt. Bevorzugt liegt ihr Gehalt an freien OH-Gruppen im Bereich von 4–8 Gew.-%.

Die Herstellung eines Co-Kondensats aus Phenolen, Aldehyden und einem hydroxyfunktionellen Alkylphenylsiloxan entspricht der üblichen Phenolharz-Herstellung, lediglich wird die Kondensationsreaktion in Gegenwart des Alkylphenylsiloxans durchgeführt. Als Reaktionspartner kommen dabei in erster Linie Phenol oder substituierte Phenole (z.B. Kresole und Xylenole) in Betracht sowie einfache Aldehyde, insbesondere Formaldehyd. Das Alkylphenylsiloxan kann dem Reaktionsansatz in fester Form zugesetzt werden, löst sich dabei im Phenol auf und nimmt dann an der Kondensationsreaktion teil. Nach beendeter Reaktion lässt sich das Endprodukt, das auch als «siloxan-modifiziertes Phenolharz» bezeichnet werden kann, problemlos entwässern.

Das siloxan-modifizierte Phenolharz wird, wie für Polyurethan-Bindemittel üblich, im allgemeinen in Form einer Lösung in einem organischen Lösemittel eingesetzt, das je nach Bedarf ein polares oder ein unpolares Lösungsmittel oder ein Gemisch beider Typen sein kann. Als unpolare Lösungsmittel geeignet sind aromatische Lösungsmittel des Typs Solventnaphtha, insbesondere solche mit einem Gehalt von mindestens 75% an aromatischen Kohlenwasserstoffen und einem Siedebereich von 110 °C bis 250 °C. Als polare Lösungsmittel geeignet sind hochsiedende Ketone und Ester, wie z.B. Cyclohexanon, Diisopropylketon, Methylisoamylketon, Äthylamylketon, Isophoron, Essigsäurebutylester, Methylglykolacetat, Butylglykolacetat, Linalylacetat, Butylcyclohexylacetat, Trimethylpentandiolmonoisobutyrat, Phthalsäuredimethylester, Phthalsäurediäthylester, Phthalsäuredibutylester und Phthalsäuredioctylester. Weitere geeignete polare Lösungsmittel sind im übrigen auch die sehr hoch siedenden Ester mit einem Siedebereich von wesentlich oberhalb 200 °C/26 mbar. Dazu gehören beispielsweise Bis(2-äthylhexyl)adipat, Dinonyladipat, Dioctyladipat, Didecyladipat, Bis(methylcyclohexyl)adipat, Bis(methylcyclohexylmethyl)adipat, Benzyloctyladipat, Bis(butoxyäthyl)adipat, Dihexylazelainat, Tetrakis(2-äthylhexyl) pyromellitat, Tris(octyl)trimellitat, Bis(2-äthylhexyl) sebacat, Dioctylsebacat, Dihexylsebacat, sowie Ester aus Alkoholgemischen wie Tri-n$C_8$–$C_{10}$-trimellitat und Di-n$C_7$–$C_9$-adipat. Es versteht sich, dass diese Lösungsmittel jeweils einzeln oder als Gemisch zum Einsatz kommen können.

Im Verfolg des Erfindungsgedankens wurde dabei als weitere Überraschung gefunden, dass die wasserresistente Wirkung des erfindungsgemässen Bindemittels noch weiter verbessert werden kann, wenn das Lösungsmittel auch noch einen Gehalt an einem Pflanzenöl, insbesondere Rizinusöl oder Leinöl, aufweist, und zwar in einer Menge von 1–10 Gew.-%, bezogen auf das Endprodukt. Es hat den Anschein, dass das Pflanzenöl die Wirkung des erfindungsgemässen Bindemittels synergetisch steigert.

Die verwendete Menge an Lösungsmittel soll ausreichen, um ein Bindemittel zu ergeben, das eine gleichmässige Umhüllung der Körner des Formgrundstoffs, eine gute Fliessfähigkeit der Formstoff-Mischung in der Anfangsphase, d.h. in der Füllphase der Form- und Kernmodelle, und eine gleichmässige Aushärtereaktion der Formstoff-Mischung sicherstellt. Die dazu geeignete Lösungsmittelmenge beträgt 20–80 Gew.-% der Bindemittelkomponenten.

Als Polyisocyanate können bei dem erfindungsgemässen Bindemittel alle auch sonst für die Herstellung von Polyurethan-Harzen gängigen Polyisocyanate mit mindestens 2 NCO-Gruppen eingesetzt werden, insbesondere diejenigen mit aromatischer Struktur. Beispiele dafür sind Diphenylmethandiisocyanat, Phenylendiisocyanat, Tetramethyldiphenylmethandiisocyanat, Diphenyldimethylmethandiisocyanat, Naphthalindiisocyanat, Toluoldiisocyanat, Diphenyldiisocyanat, Triphenyltriisocyanat, Hexandiisocyanat, Cyclohexylphenylmethandiisocyanat, Xyloldiisocyanat, Cyclohexandiisocyanat, Diphenylätherdiisocyanat oder deren halogensubstituierte Derivate. Als sehr gut geeignet haben sich auch Mischungen verschiedener Polyisocyanate gleicher Struktur erwiesen, beispielsweise die handelsüblichen Phenylmethandiisocyanat-Rohprodukte. Auch Vorpolymere von mehrwertigen Alkoholen mit Polyisocyanaten, sofern sie freie Isocyanat-Gruppen aufweisen, sind brauchbar.

Die Polyisocyanat-Komponente wird zweckmässig ebenfalls in einem organischen Lösungsmittel, bevorzugt in Aromaten z.B. vom Typ Solventnaphtha eingesetzt. Die Konzentration des Polyisocyanats liegt dabei zweckmässig im Bereich von 50–95 Gew.-%.

Die Menge des Polyisocyanats, die der Formstoff-Mischung zugesetzt wird, soll zur möglichst quantitativen Polyurethan-Bildung ausreichen und liegt, je nach Typ, im Bereich von 50% bis 150 Gew.-% der Menge an siloxan-modifiziertem Phenolharz. Bevorzugt werden dabei nahezu stöchiometrische Mengen, bezogen auf die OH-Gruppen und NCO-Gruppen.

Die nachfolgenden Beispiele erläutern die Erfindung. Dabei bedeutet «GT» jeweils Gewichtsteile.

Beispiel 1 (Stand der Technik)

In einem geschlossenen Dreihalskolben, der mit einem Rührer, einem Thermometer und einem Rückflusskühler ausgestattet war, wurde ein Ansatz aus 452 g Phenol, 0,2 g Bleinaphthenat und 232 g Paraformaldehyd (91%) vier Stunden lang kondensiert, wobei die Temperatur kontinuierlich von 95 °C auf 120 °C anstieg. Nach Vakuumdestillation zur Entfernung des Wassers sowie des überschüssigen Phenols und Formaldehyds wurde das so gewonnene Harz mit einem Lösungsmittel, das aus einem Gemisch von 35 GT Solventnaphtha (Siedebereich 160–180 °C) und 15 GT Butylphthalat bestand und noch 0,8 GT Silan enthielt, im Verhältnis 1:1 verdünnt.

Beispiel 2 (Erfindungsgemäss)

Es wurde wie in Beispiel 1 vorgegangen, nur wurde die Kondensation in Anwesenheit von 22 g eines hydroxyfunktionellen Methylphenylsiloxans mit einem mittleren Molekulargewicht von etwa 700 und mit einem Gehalt von 6,2 Gew.-% an freien –OH-Gruppen (Type Z 6018 der Firma Dow Corning Corporation) durchgeführt.

Beispiel 3 (Erfindungsgemäss)

Es wurde wie in Beispiel 2 vorgegangen, nur wurde der Lösung nachträglich noch 5 Gew.-% Rizinusöl zugesetzt.

Aus den Harzen gemäss Beispielen 1–3 wurden Formstoff-Mischungen hergestellt, die jeweils aus

| | |
|---|---|
| 100 GT | Sand H33, |
| 1 GT | Harzlösung und |
| 1 GT | einer 85%igen Lösung von Diphenylmethyldiisocyanat in Solventnaphtha |

bestanden. Diese Formstoff-Mischungen wurden nach DIN 52 401 mit einer Schiessmaschine zu Prüfkörpern (Kernen) verarbeitet, welche durch Begasung mit Dimethylisopropylamin gehärtet und dann mit Luft gespült wurden. Bei der anschliessenden Untersuchung der Festigkeiten wurden die in der nachfolgenden Tabelle angegebenen Werte ermittelt.

In der Tabelle beziehen sich die Werte in den beiden ersten Spalten «Mischung sofort verarbeitet» und «Mischung 1 h gelagert» auf unterschiedliche Standzeiten der Mischungen vor Zugabe des Katalysators. Im ersten Fall wurden die Mischungen sofort nach ihrer Fertigstellung verarbeitet, und die erhaltenen Kerne wurden innerhalb von 15 s (sofort) bzw. innerhalb von 1 h und 24 h nach Beendigung des Begasens geprüft. Im zweiten Fall liegen den Werten dagegen Mischungen zugrunde, die zunächst ohne Zusatz des Katalysators eine Stunde lang gelagert worden sind, bevor in entsprechender Weise die Kerne geschossen und die Werte für die Zeitabhängigkeit der Biegefestigkeit aufgenommen wurden.

Tabelle: Biegefestigkeit in N/cm$^2$

| | Mischung sofort verarbeitet | | Mischung 1 h gelagert | | | | Kerne in Wasserschlichte getaucht und luftgetrocknet | | |
|---|---|---|---|---|---|---|---|---|---|
| Prüfung: | sofort | 1 h | 24 h | sofort | 1 h | 24 h | 24 h | 48 h | 72 h |
| Beispiel 1 | 300 | 520 | 600 | 280 | 520 | 580 | 160 | 170 | 170 |
| Beispiel 2 | 300 | 540 | 700 | 300 | 520 | 650 | 520 | 530 | 520 |
| Beisoiel 3 | 240 | 540 | 700 | 250 | 540 | 650 | 650 | 650 | 720 |

Bei einem dritten Teil der Untersuchungen wurde so vorgegangen, dass die Kerne (aus sofort verarbeiteten Mischungen) nach der Entnahme aus der Schiessmaschine sofort in eine Wasserschlichte getaucht, dann an der Luft getrocknet und anschliessend geprüft wurden. In diesem Fall konnte die erste Prüfung erst 24 h nach Beendigung des Begasens stattfinden.

Es ist aus der Tabelle deutlich erkennbar, dass die geschlichteten Kerne bei dem Beispiel 1 (Stand der Technik) einen erheblichen Festigkeitsabfall zeigen, während bei den erfindungsgemässen Beispielen 2 und 3 nur ein verhältnismässig geringer Festigkeitsabfall eintritt. Die mit dem erfindungsgemässen Bindemittel hergestellten Kerne sind also spürbar resistenter gegen Wasser geworden.

Dieser Erfolg der Erfindung lässt sich auch noch durch eine weitere Vergleichs-Untersuchung veranschaulichen. Dazu wurden aus den Harzen gemäss Beispiel 1 und Beispiel 3 weitere Formstoff-Mischungen hergestellt, und zwar in der vorangehend beschriebenen Weise, ausser dass nur 0,7 GT Harzlösung und 0,7 GT Polyisocyanat-Lösung pro 100 GT Sand eingesetzt wurden. Diese Formstoff-Mischungen wurden dann sofort zu Kernen verarbeitet, die nach Erreichen ihrer Endfestigkeit (24 h) unterschiedlich lange in einer Atmosphäre von 100% relativer Luftfeuchtigkeit gelagert und anschliessend auf ihre Festigkeiten untersucht wurden. Die dabei gefundenen Werte sind in der beigefügten Zeichnung graphisch dargestellt, sie verdeutlichen wiederum die Überlegenheit der Erfindung.

**Patentansprüche** für die Vertragsstaaten: BE, CH, DE, FR, GB, IT, LI, NL, SE

1. Unter Polyurethan-Bildung kalthärtendes Bindemittel zur Herstellung von Giesserei-Formteilen, dessen Grundbestandteile ein Polyol in Form einer Lösung eines OH-gruppenhaltigen Phenol-Aldehyd-Kondensats und ein Polyisocyanat sind, dadurch gekennzeichnet, dass das Phenol-Aldehyd-Kondensat ersetzt ist durch ein Co-Kondensat aus Phenolen, Aldehyden und einem hydroxyfunktionellen Alkylphenylsiloxan, welches einen Gehalt von mindestens 3 Gew.-% an freien OH-Gruppen aufweist und in dem Co-Kondensat in einer Menge von 0,1 bis 5 Gew.-%, bezogen auf das Endprodukt, enthalten ist.

2. Bindemittel nach Anspruch 1, dadurch gekennzeichnet, dass das Lösungsmittel einen Gehalt von 1–10 Gew.-%, bezogen auf das Endprodukt, an Pflanzenölen, vorzugsweise Rizinusöl aufweist.

3. Verfahren zur Herstellung des Bindemittels nach Anspruch 1, wobei das Polyol durch Kondensation von Phenolen mit Aldehyden gewonnen wird, dadurch gekennzeichnet, dass die Kondensation der Phenole mit den Aldehyden in Anwesenheit von 0,1 bis 5 Gew.-%, bezogen auf das Endprodukt, des hydroxyfunktionellen Alkylphenylsiloxans durchgeführt wird.

4. Verfahren nach Anspruch 3 zur Herstellung des Bindemittels nach Anspruch 2, dadurch gekennzeichnet, dass das erhaltene Co-Kondensat mit einem Lösungsmittel aufgenommen wird, welches von 1 bis 10 Gew.-%, bezogen auf das Endprodukt, Pflanzenöl, vorzugsweise Rizinusöl enthält.

5. Verwendung des Bindemittels gemäss Anspruch 1 oder 2 zur Herstellung von Giesserei-Formteilen, die mit einer Wasserschlichte behandelt werden.

**Patentansprüche** für den Vertragsstaat: AT

1. Verfahren zur Herstellung eines unter Polyurethan-Bildung kalthärtenden Bindemittels für Giesserei-Formteile, dessen Grundbestandteile ein Polyol in Form einer Lösung eines OH-gruppenhaltigen Phenol-Formaldehyd-Kondensats und ein Polyisocyanat sind, wobei das Phenol-Formaldehyd-Kondensat durch Kondensation von Phenolen mit Aldehyden gewonnen wird, dadurch gekennzeichnet, dass die Kondensation der Phenole mit den Aldehyden in Anwesenheit von 0,1 bis 5 Gew.-%, bezogen auf das Endprodukt, eines hydroxyfunktionellen Alkylphenylsiloxans mit einem Gehalt von mindestens 3 Gew.-% an freien OH-Gruppen durchgeführt wird.

2. Verfahren nach Anspruch 1, dadurch gekennzeichnet, dass das erhaltene Co-Kondensat mit einem Lösungsmittel aufgenommen wird, welches von 1 bis 10 Gew.-%, bezogen auf das Endprodukt, Pflanzenöl, vorzugsweise Rizinusöl enthält.

3. Verwendung des gemäss Anspruch 1 oder 2 hergestellten Bindemittels zur Herstellung von Giesserei-Formteilen, die mit einer Wasserschlichte behandelt werden.

**Revendications** pour les Etats contractants: BE, CH, DE, FR, GB, IT, LI, NL, SE

1. Liant durcissable à froid avec formation de polyuréthane pour la fabrication de pièces de moules de fonderie, dont les composants de base sont un polyol sous la forme d'une solution d'un condensat de phénol-aldéhyde comportant des groupes OH, et un polyisocyanate, caractérisé en ce que le condensat phénol-aldéhyde est formé par un cocondensat de phenols, d'aldéhydes et d'un alcoylphénylsiloxane à fonction hydroxy, qui présente une teneur d'au moins 3% en poids de groupes OH libres et entre dans la composition du cocondensat à raison de 0,1 à 5% en poids par rapport au produit final.

2. Liant suivant la revendication 1, caractérisé en ce que, par rapport au produit final, le solvant présente une teneur allant de 1 à 10% en poids d'huile végétale, de préférence de l'huile de ricin.

3. Procédé de fabrication du liant suivant la revendication 1, le polyol étant obtenu par condensation de phénols et d'aldéhydes, caractérisé en ce que la condensation des phénols avec les aldéhydes est réalisée en présence de 0,1 à 5% en poids, par rapport au produit final, de alcoylphénylsiloxane à fonction hydroxy.

4. Procédé suivant la revendication 3 de fabrication du liant suivant la revendication 2, caractérisé en ce que le cocondensat obtenu est absorbé dans un solvant qui, par rapport au produit final, contient de 1 à 10% en poids d'huile végétale, de préférence de l'huile de ricin.

5. Application du liant suivant la revendication 1 ou 2 pour la fabrication de pièces de moules de fonderie, qui sont traitées avec un enduit noir à l'eau.

**Revendications** pour l'Etat contractant: AT

1. Procédé de fabrication d'un liant durcissable à froid avec formation de polyuréthane pour des pièces de moules de fonderie, dont les composants de base sont un polyol sous la forme d'une solution d'un condensat de phénol-aldéhyde comportant des groupes OH, et un polyisocyanate, le polyol étant obtenu par condensation de phénols et d'aldéhydes, caractérisé en ce que la condensation des phénols avec les aldéhydes est réalisée en présence de 0,1 à 5% en poids, par rapport au produit final, de alcoylphénylsiloxane à fonction hydroxy, avec une teneur d'au moins 3% en poids de groupes OH libres.

2. Procédé suivant la revendication 1, caractérisé en ce que le cocondensat obtenu est absorbé dans un solvant qui, par rapport au produit final, contient de 1 à 10% en poids d'huile végétale, de préférence de l'huile de ricin.

3. Application de liant fabriqué suivant la revendication 1 ou 2 pour la fabrication de pièces de moules de fonderie, qui sont traitées avec un enduit noir à l'eau.

**Claims** for the Contracting states: BE, CH, DE, FR, GB, IT, LI, NL, SE

1. Polyurethane-forming cold-setting binder for producing foundry mould parts, the basic

constituents of which are a polyol in the form of a solution of a phenol-aldehyde condensate containing an OH-group and a polyisocyanate, characterized in that the phenol-aldehyde condensate is substituted by a condensate of phenols, aldehydes and a hydroxyfunctional alkyl phenyl siloxane with a content of at least 3% by weight of free OH-groups and is contained in the CO-condensate in a quantity of 0.1 to 5% by weight in relation to the end product.

2. Binder according to Claim 1, characterized in that the solvent contains 1–10% by weight of vegetable oils, preferably ricine oil, in relation to the end product.

3. Method of producing the binder according to Claim 1, the polyol being obtained by condensation of phenols with aldehydes, characterized in that the condensation of the phenols with the aldehydes is carried out in the presence of 0.1 to 5% by weight of the hydroxyfunctional alkyl phenyl siloxane in relation to the end product.

4. Method according to Claim 3 for producing the binder according to Claim 2, characterized in that the Co-condensate obtained is picked up with a solvent containing 1 to 10% by weight of vegetable oil, preferably ricine oil, in relation to the end product.

5. Use of the binder according to Claim 1 or 2 for producing foundry mould parts which are treated with a water wash.

**Claims** for the Contracting state: AT

1. A method of producing a polyurethane-forming cold-setting binder for foundry mould parts, the basic constituents of which are a polyol in the form of a solution of a phenol-formaldehyde condensate containing an OH-group and a polyisocyanate, the phenol-formaldehyde condensate being obtained by condensation of phenols with aldehydes, characterized in that the condensation of the phenols with the aldehydes is carried out in the presence of 0.1 to 5% by weight, in relation to the end product, of a hydroxyfunctional alkyl phenyl siloxane containing at least 3% by weight of free OH-groups.

2. A method according to Claim 1, characterized in that the Co-condensate obtained is picked up with a solvent containing 1 to 10% of vegetable oil, preferably ricine oil, in relation to the end product.

3. Use of the binder produced according to Claim 1 or 2, for producing foundry mould parts which are treated with a water wash.

Translation of wording on drawing:

Biegefestigkeit = flexural strength
Lagerzeit in Tagen = Storage time in days
Beispiel = Example.

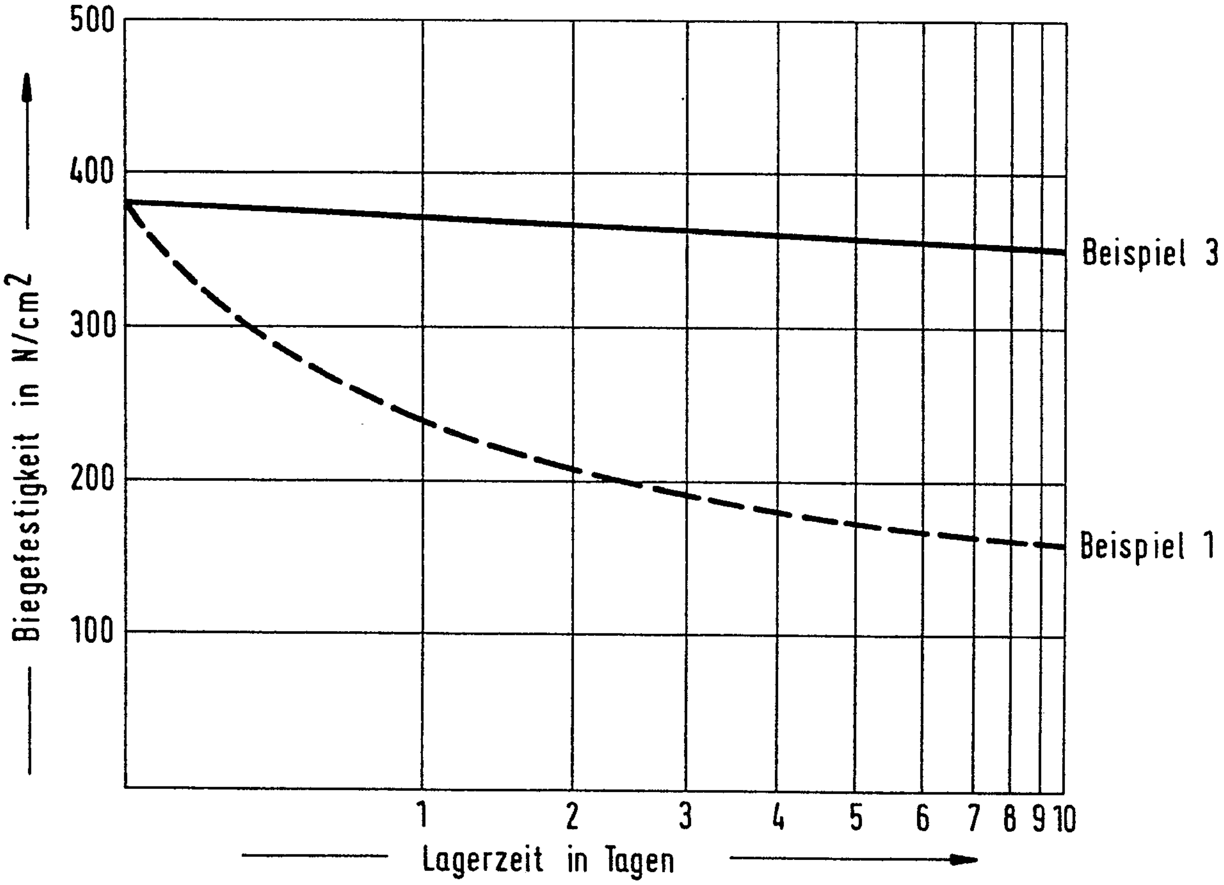
500
400
300
200
100
Biegefestigkeit in N/cm2
Beispiel 3
Beispiel 1
1
2
3
4
5
6
7
8
9
10
Lagerzeit in Tagen